# EUROPÄISCHE PATENTSCHRIFT

(11) **EP 1 315 765 B1**
(45) Veröffentlichungstag und Bekanntmachung des Hinweises auf die Patenterteilung: **28.06.2006**
(21) Anmeldenummer: 01976080.0
(22) Anmeldetag: 16.08.2001
(51) Int. Cl.: C08F 210/12, C08F 4/16, C08F 2/00, C08F 236/08

(54) **VERFAHREN ZUR HERSTELLUNG VON ISOOLEFINCOPOLYMEREN**
METHOD FOR PRODUCING ISO-OLEFIN COPOLYMERS
PROCEDE DE PRODUCTION DE COPOLYMERES D'ISO-OLEFINE

(30) Priorität: 28.08.2000 DE 10042118
(43) Veröffentlichungstag der Anmeldung: 04.06.2003
(73) Patentinhaber: LANXESS Deutschland GmbH, 51369 Leverkusen (DE)
(72) Erfinder: LANGSTEIN, Gerhard, 51515 Kürten (DE); BOHNENPOLL, Martin, 51375 Leverkusen (DE)
(86) Internationale Anmeldenummer: PCT/EP2001/009423
(87) Internationale Veröffentlichungsnummer: WO 2002/018460

(56) Entgegenhaltungen:
- EP-A- 0 279 456
- EP-A- 0 556 965
- EP-A- 0 818 476
- EP-A- 1 122 267
- WO-A-94/28037
- US-A- 2 682 531
- US-A- 5 663 470

## Beschreibung

Gegenstand der vorliegenden Erfindung ist ein neues Verfahren zur Herstellung von Isoolefincopolymeren in Gegenwart von Zirkonhalogeniden und/oder Hafniumhalogeniden und organischen Nitroverbindungen, insbesondere zur Herstellung von höherisoprenhaltigen Butylkautschuken.

Das derzeit praktizierte Herstellverfahren für Butylkautschuk ist z.B. aus Ullmanns Encyclopedia of Industrial Chemistry, Vol. Ȧ 23, 1993, Seiten 288-295 bekannt. Die Durchführung der kationischen Copolymerisation von Isobuten mit Isopren im Slurryverfahren und mit Methylchlorid als Prozesslösungsmittel erfolgt mit Aluminiumtrichlorid als Initiator unter Zusatz geringer Mengen von Wasser oder Chlorwasserstoff bei -90°C. Die tiefen Polymerisationstemperaturen sind zur Erzielung ausreichend hoher Molekulargewichte für Kautschukanwendungen notwendig.

Der molekulargewichtserniedrigende (= regelnde) Effekt der dienischen Comonomeren kann prinzipiell durch noch tiefere Reaktionstemperaturen kompensiert werden. Dabei treten jedoch die zur Gelbindung führenden Nebenreaktionen verstärkt auf. Die Gelbildung bei Reaktionstemperaturen um -120°C und Möglichkeiten zu deren Reduktion sind beschrieben (siehe: W.A. Thaler, D.J. Buckley, Sr., Meeting of the Rubber Division, ACS, Cleveland, Ohio, May 6-9, 1975, veröffentlicht in Rubber Chemistry & Technology 49, 960-966 (1976)). Die dabei notwendigen Hilfslösungsmittel wie CS₂ sind zum einen schwer zu handhaben und müssen außerdem in relativ hohen Konzentrationen eingesetzt werden.

Bekannt ist weiterhin die gelfreie Copolymerisation von Isobuten mit verschiedenen Comonomeren zu für Kautschukanwendungen ausreichend hochmolekularen Produkten bei Temperaturen um -40°C unter Verwendung von präformiertem Vanadiumtetrachlorid (EP-A1-818 476).

US-A-2,682,531 beschreibt Zirkontetrachlorid-Etherkomplexe und deren Verwendung als Katalysatoren zur Polymerisation von unter anderem Isoolefinen. In Spalte 2, Z. 20 ff. wird betont, dass die Verwendung von Zirkontetrachlorid alleine zu ungenügenden Resultaten führt. Der vorzugsweise genutzte Ether ist der krebserregende β,β'-Dichlorethyl-Ether. Der ebenfalls als Beispiel aufgeführte Diphenylether führt nur zu schlecht löslichen Komplexen, die nur in extrem hoher Dosierung eine ausreichende Aktivität zeigen. Diethylether (im Patent namentlich als möglicher Ether genannt) führt zu völlig wirkungslosen Komplexen.

Aufgabe der vorliegenden Erfindung war die Bereitstellung eines Verfahrens zur Herstellung von hochmolekularen gelarmen Isoolefincopolymeren, insbesondere zur Herstellung von Butylkautschuken mit mehr als 2 % Isopren im Polymer.

Gegenstand der vorliegenden Erfindung ist ein Verfahren zur Herstellung von hochmolekularen Isoolefincopolymeren in Gegenwart von Zirkonhalogeniden und/oder Hafniumhalogeniden, dadurch gekennzeichnet, dass man in Gegenwart von organischen Nitroverbindungen polymerisiert.

Bevorzugt wird das Verfahren bei Isoolefinen mit 4 bis 16 Kohlenstoffatomen und mit den Isoolefinen copolymerisierbaren Dienen gegebenfalls in Gegenwart von weiteren mit den Monomeren copolymerisierbaren Monomeren eingesetzt. Besonders bevorzugt werden Isobuten und Isopren gegebenfalls in Gegenwart von weiteren mit diesen copolymerisierbaren Monomeren eingesetzt.

Das Verfahren wird bevorzugt in einem für die kationische Polymerisation geeigneten Lösungsmittel, wie halogenierte und nicht-halogenierte Kohlenwasserstoffen oder deren Gemische, insbesondere Chloralkanen und Chloralkan/Alkan-Gemischen, ganz besonders Methylchlorid und Methylenchlorid oder deren Mischungen mit Alkanen, durchgeführt.

Bevorzugt wird das Zirkonhalogenid und/oder Hafniumhalogenid in Abwesenheit des Monomeren mit der nitroorganischen Verbindung gemischt.

Die zum Einsatz kommenden organischen Nitroverbindungen sind generell bekannt und allgemein verfügbar. Die erfindungsgemäß bevorzugt verwendeten Nitroverbindungen sind durch die allgemeine Formel (I)

R-NO₂ (I)

definiert, wobei R ausgewählt wird aus der Gruppe C₁-C₁₈-Alkyl, C₃-C₁₈-Cycloalkyl oder C₆-C₂₄-Cycloaryl.

Unter C₁-C₁₈-Alkyl werden sämtliche dem Fachmann bekannte lineare oder verzweigte Alkylreste mit 1 bis 18 C-Atomen verstanden, wie Methyl, Ethyl, n-Propyl, i-Propyl, n-Butyl, i-Butyl, t-Butyl, n-Pentyl, i-Pentyl, neo-Pentyl, Hexyl und die weiteren Homologen, die ihrerseits wiederum substituiert sein können. Als Substituenten kommen hierbei insbesondere Alkyl, sowie Cycloalkyl oder Aryl in Frage, wie Benzyl, Trimethylphenyl, Ethylphenyl. Bevorzugt werden lineare Alkylreste mit 1-18 C-Atomen, besonders bevorzugt Methyl, Ethyl und Benzyl.

Unter C₆-C₂₄-Aryl werden sämtliche dem Fachmann bekannte ein- oder mehrkernige Arylreste mit 6 bis 24 C-Atomen verstanden, wie Phenyl, Naphthyl, Anthracenyl, Phenanthracenyl, und Fluorenyl, die ihrerseits wiederum substituiert sein können verstanden. Als Substituenten kommen hierbei insbesondere Alkyl, sowie Cycloalkyl oder Aryl in Frage, wie Toloyl und Methylfluorenyl. Bevorzugt wird Phenyl.

Unter C₃-C₁₈-Cycloalkyl werden sämtliche dem Fachmann bekannte ein- oder mehrkernige Cycloalkylreste mit 3 bis 18 C-Atomen verstanden, wie Cyclopropyl, Cyclobutyl, Cyclopentyl, Cyclohexyl, Cycloheptyl, Cyclooctyl und die weiteren Homologen, die ihrerseits wiederum substituiert sein können. Als Substituenten kommen hierbei insbesondere Alkyl, sowie Cycloalkyl oder Aryl in Frage, wie Benzyl, Trimethylphenyl, Ethylphenyl. Bevorzugt werden Cyclohexyl und Cyclopentyl.

Die Konzentration der organischen Nitroverbindung im Reaktionsmedium beträgt dabei bevorzugt im Bereich von 5 bis 15000 ppm, besonders bevorzugt im Bereich von 50 bis 7000 ppm. Das molare Verhältnis Nitroverbindung zu Zirkon und/oder Hafnium ist dabei bevorzugt im Bereich von 100 : 1, besonders bevorzugt im Bereich von 25: 1 und ganz besonders bevorzugt im Bereich von 14 : 1 bis 1 : 1.

Die Polymerisation der Monomeren erfolgt in der Regel kationisch bei Temperaturen im Bereich von -120°C bis +20°C, bevorzugt im Bereich von -100°C bis -20°C und Drücken im Bereich von 0,1 bis 4 bar.

Geeignete Zirkonhalogenide und/oder Hafniumhalogenide sind beispielsweise Zirkondichlorid, Zirkontrichlorid, Zirkontetrachlorid, Zirkonoxidichlorid, Zirkontetrafluorid, Zirkontetrabromid und Zirkontetrajodid, Hafniumdichlorid, Hafniumtrichlorid, Hafniumoxidichlorid, Hamiumtetrafluorid, Hafniumtetrabromid und Hafniumtetrajodid und Hafniumtetrachlorid. Ungeeignet sind in der Regel Zirkon- und/oder Hafniumhalogenide mit sterisch anspruchsvollen Substituenten wie z.B. Zirkonocendichlorid oder Bis(methylcyclopentadienyl)zirkonium-dichlorid. Bevorzugt wird Zirkontetrachlorid eingesetzt. Dieses kann vorteilhaft in Form einer Lösung in einem wasser- und sauerstofffreien Alkan oder Chloralkan oder einem Gemisch der beiden mit einer Zirkonkonzentration unterhalb von 4 Gew.% eingesetzt werden. Es kann vorteilhaft sein, die Zr-Lösung bei Raumtemperatur oder darunter für wenige Minuten bis zu 1000 Stunden zu lagern (altem), bevor sie eingesetzt wird. Es kann vorteilhaft sein, diese Alterung unter Lichteinwirkung durchzuführen.

Weiterhin kann es vorteilhaft sein, Mischungen des erfindungsgemässen Katalysatorsystems mit herkömmlichen Katalysatoren, wie AlCl₃ und aus AlCl₃ herstellbaren Katalysatorsysteme, Diethylaluminiumchlorid, Ethylaluminiumchlorid, Titantetrachlorid, Zinntetrachlorid, Bortrifluorid, Bortrichlorid, Vanadiumtetrachlorid oder Methylalumoxan, insbesondere AlCl₃ und aus AlCl₃ herstellbaren Katalysatorsystemen, einzusetzen. Diese Kombination stellt einen weiteren Gegenstand der Erfindung dar.

Bei der Herstellung derartiger Mischungen kann das molare Verhältnis Lewis-Säure : Zirkon und/oder Hafnium im Bereich von 99:1 bis 1:99 liegen, bevorzugt im Bereich von 99:1 bis 1:1, besonders bevorzugt im Bereich von 20:1 bis 5:1.

Das molare Verhältnis Nitroverbindung zu Zirkon und/oder Hafnium ist bei derartigen Mischungen bevorzugt im Bereich von 1000 : 1, besonders bevorzugt im Bereich von 250: 1 und ganz besonders bevorzugt im Bereich von 100 : 1 bis 1 : 1.

Es kann vorteilhaft sein, dem Katalysatorsystem geringe Mengen von Wasser, Alkoholen, eines Alkylhalogenids oder Halogenwasserstoff zuzusetzen.

Die Polymerisation kann sowohl in kontinuierlicher als auch in diskontinuierlicher Fahrweise durchgeführt werden. In kontinuierlicher Fahrweise wird das Verfahren bevorzugt mit folgenden drei Einfahrströmen durchgeführt:

Lösungsmittel/Verdünnungsmittel + Isoolefin (bevorzugt Isobuten)
Dien (bevorzugt Isopren)
Zirkonhalogenid und/oder Hafniumhalogenid (bevorzugt ZrCl₄ in Lösungsmittel) + organische Nitroverbindung

In einer diskontinuierlichen Fahrweise kann das Verfahren beispielsweise wie folgt durchgeführt werden:

Der auf Reaktionstemperatur vorgekühlte Reaktor wird mit dem Lösungsmittel oder Diluent und den Monomeren beschickt. Anschließend wird der Initiator zusammen mit der Nitroverbindung in Form einer verdünnten Lösung so zugepumpt, dass die Polymerisationswärme problemlos abgeführt werden kann. Der Verlauf der Reaktion kann anhand der Wärmeentwicklung verfolgt werden.

Alle Operationen werden unter Schutzgas durchgeführt. Nach dem Ende der Polymerisation wird mit einem phenolischen Antioxidant, wie z.B. 2,2'-Methylen-bis-(4-methyl-6-tert-butylphenol), gelöst in Ethanol abgestoppt.

Durch das erfindungsgemäße Verfahren lassen sich hochmolekulare Isoolefincopolymere herstellen. Die Doppelbindungen werden durch die Menge an eingebautem Dien bestimmt. Die Molekulargewichte (Mv) reichen (je nach Isoprengehalt und Reaktionstemperatur) üblicherweise von 300 - 1200 kg/mol, die Polymere haben einen sehr geringen Gelgehalt.

Ein grosser Vorteil des erfindungsgemässen Verfahrens ist ausserdem die deutliche Reduzierung des sog. "fouling". Unter fouling versteht er Fachmann die Bildung von Polymerablagerungen an den Wänden des Reaktors sowie innerhalb der Wärmetauscher. Durch diese Ablagerungen wird die Abfuhr der entstehenden Reaktionswärme erschwert und schließlich soweit gestört, dass der Reaktor nach wenigen Tagen gereinigt werden muss, um einen ordnungsgemäßen Betrieb zu gewährleisten.

Die erhältlichen Polymere eignen sich vorzüglich zur Herstellung von Formkörpem aller Art, insbesondere Reifenbestandteilen, ganz besonders sog. inner linern, sowie sog. Technischen Gummiartikeln, wie Stopfen, Dämpfungselemente, Profile, Folien, Beschichtungen. Die Polymere werden hierzu rein oder im Gemisch mit anderen Kautschuken, wie BR, HNBR, NBR, SBR, EPDM oder Fluorkautschuken eingesetzt.

Zur Veranschaulichung der vorliegenden Erfindung sind folgende Beispiele angeführt:

### Beispiele

### Experimentelle Einzelheiten

Die Gelgehalte wurden in Toluol nach einer Lösezeit von 24 Stunden bei 30°C mit einer Probenkonzentration von 12,5 g/l bestimmt. Die Abtrennung der unlöslichen Anteile erfolgte durch Ultrazentrifugation (1 Stunde bei 20 000 UpM und 25°C). Proben mit hohem Gelgehalt wurden in o-Dichlorbenzol bei 140°C überprüft.

Die **Lösungsviskosität** η der löslichen Anteile wurde in Toluol bei 30°C durch Ubbelohde-Kapillarviskosimetrie bestimmt.

Das aus der Grenzviskosität berechnete **Molekulargewicht M**_{**v**} wurde nach der folgenden Formel bestimmt: ln (Mᵥ) = 12,48 + 1,565 * ln η.

Der Mooney-Wert wurde bei 125°C nach einer Messdauer von 8 Minuten bestimmt.

Als Schutzgas wurde Argon der Qualität 4,8 (Linde) verwendet.

Der **Monomereneinbau** und der **"branching point"**^{**1**} wurden mittels Hochfeldprotonenresonanz bestimmt.
¹ J. L. White, T. D. Shaffer, C. J. Ruff, J. P. Cross: Macromolecules (1995) 28, 3290

Das bei den Polymerisationen eingesetzte **Isobuten** (Fa. Gerling+Holz, Deutschland, Qualität 2.8) wurde zur Trocknung durch eine mit Natrium auf Aluminiumoxid (Gehalt 10 %) gefüllte Säule geleitet.

Das verwendete **Isopren** (Fa. Acros, 99%) wurde zur Entfernung des Stabilisators unter Argon durch eine Säule mit getrocknetem Aluminiumoxid filtriert, unter einer Argonatmosphäre über Calciumhydrid destilliert, und in dieser Form für die Polymerisation eingesetzt. Der Wassergehalt betrug 25 ppm.

Das verwendete **Methylchlorid** (Fa. Linde, Qualität 2.8) wurde zur Reinigung durch eine Säule mit Aktivkohle und eine weitere Säule mit Sicapent geleitet und in dieser Form eingesetzt.

Das **Methylenchlorid** (Fa. Merck, Qualität: Zur Analyse ACS, ISO) wurde zur Trocknung unter einer Argonatmosphäre über Phosphorpentoxid destilliert.

Das **Nitromethan** (Fa. Aldrich, 96 %) wurde zunächst 2 Stunden mit Phosphorpentoxid gerührt, wobei ein konstanter Argonstrom durch die Mischung geleitet wurde. Anschließend wurde im Vakuum bei etwa 20 mbar destilliert.

Das verwendete **Zirkontetrachlorid** (>= 98 %) wurde von der Fa. Fluka bezogen.

Das verwendete **Aluminiumtrichlorid** (98,5 %) wurde von der Fa. Janssen Chimica bezogen.

Zum **Abstoppen der Polymerisationen** wurde eine gekühlte Lösung von 2 g Irganox 1010 (Ciba) in 250 ml Ethanol verwendet.

### Beispiel 1 (Bereitung des Initiators)

14,56 g (62,5 mmol) Zirkontetrachlorid wurde unter einer Argonatmosphäre in einem 2-Hals-Rundkolben vorgelegt. 500 ml Methylenchlorid und 44,3 ml (49,9 g) Nitromethan wurden zugegeben. (Verhältnis Zr/Nitromethan 1:13).

Diese Mischung wurde 2 Stunden bei Raumtemperatur gerührt und anschließend 24 Stunden stehen gelassen. Die noch ungelösten Bestandteile (geringe Menge, vermutlich Zirkondioxid) setzten sich während dieser Zeit am Boden des Kolbens ab.

Die überstehende farblose Lösung wurde für die Initiierung der Polymerisation verwendet.

Im Lauf mehrerer Tage wird eine Verfärbung der Lösung nach Gelb → Orange beobachtet, offenbar durch Zersetzung des Initiators. Eine leichte Gelbfärbung kann noch toleriert werden, eine orange gefärbte Lösung verliert einen großen Teil ihrer Wirkung.

### Beispiel 2

In einen 2-1 4-Hals-Kolben wurden unter einer Argonatmosphäre bei einer Temperatur von -80°C 700 g (679,2 ml) Methylchlorid und 52 g (0,93 mol) Isobuten einkondensiert (Konzentration 6,91 Gew.%).

Nach Zugabe von 1,6 g (0,02 mol, 2,35 ml) Isopren (2,47 mol%) wurden 3 ml Initiatorlösung aus Beispiel 1 innerhalb von 5 Minuten zudosiert. Die heftige Reaktion wurde nach 5 Minuten abgestoppt. Es wurde eine milchartiger feinteilige Suspension erhalten ohne Fladenbildung und ohne fouling.

Das gebildete Polymer wurde durch Zugabe von 2500 ml Aceton ausgefällt, durch Abpressen auf der Laborwalze vorgetrocknet und anschließend über Nacht im Vakuum bei 50°C getrocknet.

Die Analysenergebnisse sind in folgender Tabelle 1 dargestellt.

**Tabelle 1:**

| | |
|---|---|
| Ausbeute | 22,5 g (42 %) |
| Staudinger-Index | 1,096 dl/g |
| Molekulargewicht Mv | 303,6 kg/mol |
| Mn | 185,1 kg/mol |
| Mw | 436,5 kg/mol |
| Gelgehalt | 0,7 % |
| Isopreneinbau | 2,2 % |

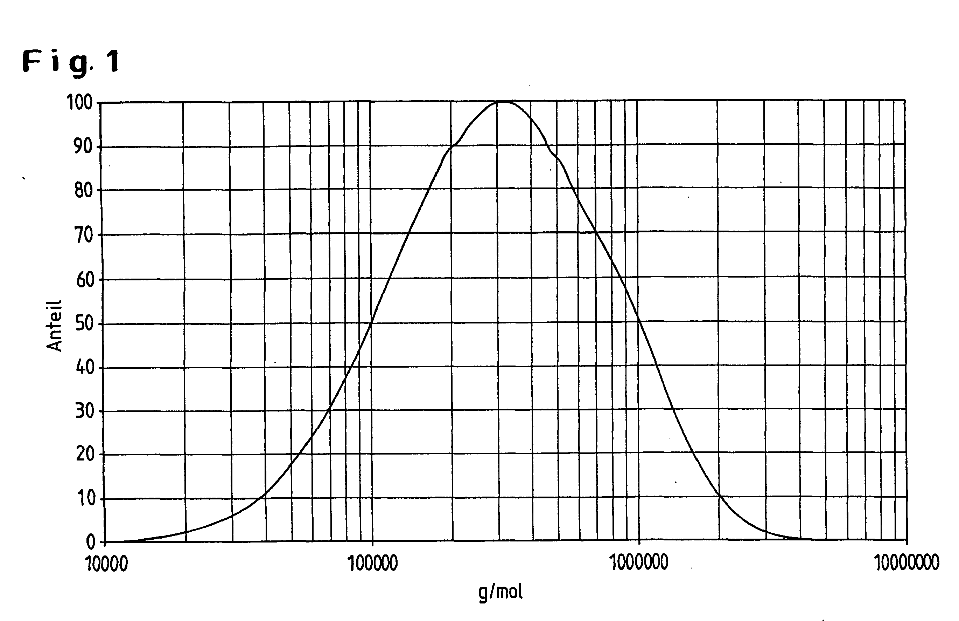

Figur 1 zeigt das Ergebnis der GPC-Untersuchung von Beispiel 2.

### Beispiel 3

In einen 2-1 4-Hals-Kolben wurden unter einer Argonatmosphäre bei einer Temperatur von -95°C 700 g (679,2 ml) Methylchlorid und 120 g (2,14 mol) Isobuten einkondensiert (Konzentration 15 Gew.%). Nach Zugabe von 4,98 g (0,07 mol, 7,3 ml) Isopren (3,3 mol%) wurden 25 ml Initiatorlösung gemäß Beispiel 1 innerhalb von 30 Minuten zudosiert. Es wurde eine milchartige Suspension erhalten, fouling trat nicht auf. Die schwache Reaktion wurde nach 30 Minuten abgestoppt.

Das gebildete Polymer wurde durch Zugabe von 2500 ml Aceton ausgefällt, durch Abpressen auf der Laborwalze vorgetrocknet und anschließend über Nacht im Vakuum bei 50°C getrocknet.

Die Analysenergebnisse sind in folgender Tabelle 2 dargestellt.

**Tabelle 2**

| | |
|---|---|
| Ausbeute | 42,1 g (33,7 %) |
| Staudinger-Index | 1,74 dl/g |
| Gelgehalt | 0,6 % |
| Molekulargewicht Mv | 625,8 kg/mol |
| Mn | 386,2 kg/mol |
| Mw | 830,1 kg/mol |
| Isopreneinbau | 1,9 % |
| Mooney-Wert | 81,5 |

### Beispiel 4

In einen 2-1 4-Hals-Kolben wurden unter einer Argonatmosphäre bei einer Temperatur von -95°C 700 g (679,2 ml) Methylchlorid und 300 g (5,35 mol) Isobuten einkondensiert (Konzentration 30 Gew.%). Nach Zugabe von 27,4 g (0,4 mol, 40,23 ml) Isopren (7 mol%) wurden 7 ml Initiatorlösung gemäß Beispiel 1 innerhalb von 10 Minuten zudosiert. Die heftige Reaktion wurde nach 5 Minuten abgestoppt.

Das gebildete Polymer wurde durch Zugabe von 2500 ml Aceton ausgefällt, durch Abpressen auf der Laborwalze vorgetrocknet und anschließend über Nacht im Vakuum bei 50°C getrocknet.

Die Analysenergebnisse sind in folgender Tabelle 3 dargestellt.

**Tabelle 3**

| | |
|---|---|
| Ausbeute | 12,1 g (3,7 %) |
| Staudinger-Index | 2,337 dl/g |
| Molekulargewicht Mv | 993 kg/mol |
| Mn | 448,8 kg/mol |
| Mw | 1070 kg/mol |
| Gelgehalt | 1,5 % |
| Isopreneinbau | 3,5 % |

### Beispiel 5 (Vergleichsbeispiel gemäss US-A-2,682,531: Herstellung des Initiators)

14,56 g (62,5 mmol) Zirkontetrachlorid wurde unter einer Argonatmosphäre in einem 2-Hals-Rundkolben vorgelegt. 1000 ml Methylenchlorid und 10,5 ml (11,3 g) Diphenylether wurden zugegeben. (Verhältnis Zr/Diphenylether 1:1).

Diese Mischung wurde 6 Stunden bei Raumtemperatur gerührt und anschließend 22 Tage stehen gelassen. Die noch ungelösten Bestandteile setzten sich während dieser Zeit am Boden des Kolbens ab. Die überstehende tiefrote Lösung wurde für die Initiierung der Polymerisation verwendet.

### Beispiel 6 (Vergleichsbeispiel gemäss US-A-2,682,531: Polymerisation)

In einen 2-l 4-Hals-Kolben wurden unter einer Argonatmosphäre bei einer Temperatur von -95°C 700 g (679,2 ml) Methylchlorid und 230 g (4,10 mol) Isobuten einkondensiert (Konzentration 26,4 Gew.%). Nach Zugabe von 21 g (0,31 mol, 30,84 ml) Isopren (7 mol%) wurden 150 ml Initiatorlösung (Beispiel 5) innerhalb von 45 Minuten zudosiert. Die Reaktion wurde unmittelbar nach Beendigung der Zugabe abgestoppt.

Das gebildete Polymer wurde durch Zugabe von 2500 ml Aceton ausgefällt, durch Abpressen auf der Laborwalze vorgetrocknet und anschließend über Nacht im Vakuum bei 50°C getrocknet.

Die Analysenergebnisse sind in folgender Tabelle 4 dargestellt.

**Tabelle 4**

| | |
|---|---|
| Ausbeute | 125,8 g (50,12 %) |
| Staudinger-Index | 0,919 dl/g |
| Molekulargewicht Mv | 230,4 kg/mol |
| Mn | 54,9 kg/mol |
| Mw | 370,6 kg/mol |
| Gelgehalt | 29 % |
| Mooney-Wert | 44,3 |

Die Analysenergebnisse des Produkts zeigen trotz des guten Mooney-Werts nur ein niedriges Molekulargewicht und einen für die meisten Kautschukanwendungen viel zu hohen Gelanteil. Das erfindungsgemäße Beispiel 4, das unter vergleichbaren Bedingungen durchgeführt wurde, führte zu einem deutlich besseren Produkt.

Herstellung weiterer Initiatorsysteme unter Verwendung unterschiedlicher Nitroverbindungen

### Beispiel 7 (Bereitung eines Initiators unter Verwendung von 2-Nitropropan)

11,4 g (48,9 mmol) Zirkontetrachlorid wurde unter einer Argonatmosphäre in einem 2-Hals-Rundkolben vorgelegt. 390 ml Methylenchlorid und 95 ml (94,24 g) 2-Nitropropan wurden zugegeben. (Verhältnis Zr/Nitroverbindung 1:21,6).

Diese Mischung wurde 2 Stunden bei Raumtemperatur gerührt und anschließend 5 Tage stehen gelassen. Die noch ungelösten Bestandteile (geringe Menge) setzten sich während dieser Zeit am Boden des Kolbens ab. Die überstehende farblose Lösung wurde für die Initiierung der Polymerisation verwendet.

### Beispiel 8 (Bereitung eines Initiators unter Verwendung von 1-Nitropropan)

0,7 g (3 mmol) Zirkontetrachlorid wurde unter einer Argonatmosphäre in einem 2-Hals-Rundkolben vorgelegt. 24 ml Methylenchlorid und 3,5 ml (3,47 g) 1-Nitropropan wurden zugegeben. (Verhältnis Zr/Nitroverbindung 1:13).

Diese Mischung wurde 2 Stunden bei Raumtemperatur gerührt und anschließend 2 Tage stehen gelassen. Die noch ungelösten Bestandteile (geringe Menge) setzten sich während dieser Zeit am Boden des Kolbens ab. Die überstehende farblose Lösung wurde für die Initiierung der Polymerisation verwendet.

### Beispiel 9 (Bereitung eines Initiators unter Verwendung von Nitroethan)

1,9 g (8,15 mmol) Zirkontetrachlorid wurde unter einer Argonatmosphäre in einem 2-Hals-Rundkolben vorgelegt. 65 ml Methylenchlorid und 7,8 ml (8,15 g) Nitroethan wurden zugegeben. (Verhältnis Zr/Nitroverbindung 1:13,3).

Diese Mischung wurde 2 Stunden bei Raumtemperatur gerührt und anschließend 4 Tage stehen gelassen. Die noch ungelösten Bestandteile (geringe Menge) setzten sich während dieser Zeit am Boden des Kolbens ab. Die überstehende farblose Lösung wurde für die Initiierung der Polymerisation verwendet.

### Beispiel 10 (Bereitung eines Initiators unter Verwendung von Nitrobenzol)

9,7 g (41,6 mmol) Zirkontetrachlorid wurde unter einer Argonatmosphäre in einem 2-Hals-Rundkolben vorgelegt. 330 ml Methylenchlorid und 60 ml (71,76 g) Nitrobenzol wurden zugegeben. (Verhältnis Zr/Nitroverbindung 1:14).

Diese Mischung wurde 2 Stunden bei Raumtemperatur gerührt und anschließend 1 Tag stehen gelassen. Die noch ungelösten Bestandteile (geringe Menge) setzten sich während dieser Zeit am Boden des Kolbens ab. Die überstehende farblose Lösung wurde für die Initiierung der Polymerisation verwendet.

Verwendung der Initiatorsysteme von Beispiel 7-10

### Beispiel 11

In einen 2-l 4-Hals-Kolben wurden unter einer Argonatmosphäre bei einer Temperatur von -95°C 700 g (679,2 ml) Methylchlorid und 120 g (2,14 mol) Isobuten einkondensiert (Konzentration 15 Gew.%). Nach Zugabe von 4,98 g (0,07 mol, 7,3 ml) Isopren (3,3 mol%) wurden 25 ml Initiatorlösung gemäß Beispiel 7 innerhalb von 30 Minuten zudosiert. Die schwache Reaktion wurde nach 30 Minuten abgestoppt.

Das gebildete Polymer wurde durch Zugabe von 2500 ml Aceton ausgefällt, durch Abpressen auf der Laborwalze vorgetrocknet und anschließend über Nacht im Vakuum bei 50°C getrocknet.

Die Analysenergebnisse sind in folgender Tabelle 5 dargestellt.

**Tabelle 5**

| | |
|---|---|
| Ausbeute | 1,1 g (0,9 %) |
| Staudinger-Index | 0,682 dl/g |
| Gelgehalt | 1,1 % |
| Molekulargewicht Mv | 144,5 kg/mol |
| Mn | 82,6 kg/mol |
| Mw | 198,3 kg/mol |

Die Analysenergebnisse zeigen, dass 2-Nitropropan als verzweigte Verbindung deutlich schlechtere Eigenschaften besitzt als lineare Nitro-alkyle.

### Beispiel 12

In einen 2-l 4-Hals-Kolben wurden unter einer Argonatmosphäre bei einer Temperatur von -95°C 700 g (679,2 ml) Methylchlorid und 120 g (2,14 mol) Isobuten einkondensiert (Konzentration 15 Gew.%). Nach Zugabe von 4,98 g (0,07 mol, 7,3 ml) Isopren (3,3 mol%) wurden 5 ml Initiatorlösung gemäß Beispiel 8 innerhalb von 5 Minuten zudosiert. Es wurde eine milchartige Suspension mit vereinzelten Flocken erhalten, fouling trat nicht auf. Die heftige Reaktion wurde sofort nach Beendigung der Zugabe abgestoppt.

Das gebildete Polymer wurde durch Zugabe von 2500 ml Aceton ausgefällt, durch Abpressen auf der Laborwalze vorgetrocknet und anschließend über Nacht im Vakuum bei 50°C getrocknet.

Die Analysenergebnisse sind in folgender Tabelle 6 dargestellt.

**Tabelle 6**

| | |
|---|---|
| Ausbeute | 4,1 g (3,3 %) |
| Staudinger-Index | 2,2 dl/g |
| Gelgehalt | 0,9 % |
| Molekulargewicht Mv | 903,4 kg/mol |
| Mn | 610,2 kg/mol |
| Mw | 1294 kg/mol |

### Beispiel 13

In einen 2-l 4-Hals-Kolben wurden unter einer Argonatmosphäre bei einer Temperatur von -95°C 700 g (679,2 ml) Methylchlorid und 120 g (2,14 mol) Isobuten einkondensiert (Konzentration 15 Gew.%). Nach Zugabe von 4,98 g (0,07 mol, 7,3 ml) Isopren (3,3 mol%) wurden 6 ml Initiatorlösung gemäß Beispiel 9 innerhalb von 10 Minuten zudosiert. Es wurde eine milchartige Suspension erhalten, fouling trat nicht auf. Die heftige Reaktion wurde sofort nach Beendigung der Zugabe abgestoppt.

Das gebildete Polymer wurde durch Zugabe von 2500 ml Aceton ausgefällt, durch Abpressen auf der Laborwalze vorgetrocknet und anschließend über Nacht im Vakuum bei 50°C getrocknet.

Die Analysenergebnisse sind in folgender Tabelle 7 dargestellt.

**Tabelle 7**

| | |
|---|---|
| Ausbeute | 6,4 g (5,1 %) |
| Staudinger-Index | 1,451 dl/g |
| Gelgehalt | 0,8 % |
| Molekulargewicht Mv | 471 kg/mol |
| Mn | 304,1 kg/mol |
| Mw | 627,9 kg/mol |

### Beispiel 14

In einen 2-l 4-Hals-Kolben wurden unter einer Argonatmosphäre bei einer Temperatur von -95°C 700 g (679,2 ml) Methylchlorid und 120 g (2,14 mol) Isobuten einkondensiert (Konzentration 15 Gew.%). Nach Zugabe von 4,98 g (0,07 mol, 7,3 ml) Isopren (3,3 mol%) wurden 25 ml Initiatorlösung gemäß Beispiel 10 innerhalb von 30 Minuten zudosiert. Die schwache Reaktion wurde nach 30 Minuten abgestoppt.

Das gebildete Polymer wurde durch Zugabe von 2500 ml Aceton ausgefällt, durch Abpressen auf der Laborwalze vorgetrocknet und anschließend über Nacht im Vakuum bei 50°C getrocknet.

Die Analysenergebnisse sind in folgender Tabelle 8 dargestellt.

**Tabelle 8**

| | |
|---|---|
| Ausbeute | 2,3 g (0,9 %) |
| Staudinger-Index | 1,721 dl/g |
| Gelgehalt | 1,2 % |
| Molekulargewicht Mv | 615,2 kg/mol |
| Mn | 363,9 kg/mol |
| Mw | 877,7 kg/mol |

### Beispiel 15 Temperaturabhängigkeit der Molekulargewichte

### Allgemeine Vorschrift:

In einen 2-l 4-Hals-Kolben wurden unter einer Argonatmosphäre bei einer Temperatur von -70°C 700 g (679,2 ml) Methylchlorid und 52 g (0,93 mol) Isobuten einkondensiert (Konzentration 6,9 Gew.%). Nach Zugabe von 1,6 g (0,02 mol, 2,4 ml) Isopren (2,47 mol%) wurde der Ansatz durch Erwärmen bzw. Abkühlen auf die gewünschte Reaktionstemperatur gebracht und die Initiatorlösung gemäß Beispiel 1 zudosiert. Die im allgemeinen sehr heftige Reaktion wurde abgestoppt, sobald die Temperaturkontrolle nicht mehr möglich war.

Das gebildete Polymer wurde durch Zugabe von 2500 ml Aceton ausgefällt, durch Abpressen auf der Laborwalze vorgetrocknet und anschließend über Nacht im Vakuum bei 50°C getrocknet.

Die Details der einzelnen Versuche sind in der folgenden Tabelle 9 dargestellt.

**Tabelle 9**

| lfd. Nr. | Reaktions-temperatur (°C) | Staudinger-Index (dl/g) | T (K) | 1/T* 1000 | Mv (g/mol) | ml Initiator-lösung | Reaktions-dauer (min) | Ausbeute (g) |
|---|---|---|---|---|---|---|---|---|
| a | -95 | 1,925 | 178,16 | 5,6129322 | 733042,632 | 5 | 1 | 6,8 |
| b | -85 | 1,924 | 188,16 | 5,31462585 | 732446,765 | 5 | 1 | 12,3 |
| c | -80 | 1,096 | 193,16 | 5,17705529 | 303597,822 | 3 | 5 | 22,5 |
| d | -70 | 0,693 | 203,16 | 4,92222879 | 148163,984 | 9 | 15 | 25,2 |
| e | -60 | 0,348 | 213,16 | 4,69131169 | 50415,7986 | 4 | 10 | 23 |
| f | -50 | 0,308 | 223,16 | 4,4810898 | 41646,3558 | 4 | 10 | 26,4 |
| g | -40 | 0,219 | 233,16 | 4,28890033 | 24422,5031 | 7 | 10 | 36,4 |

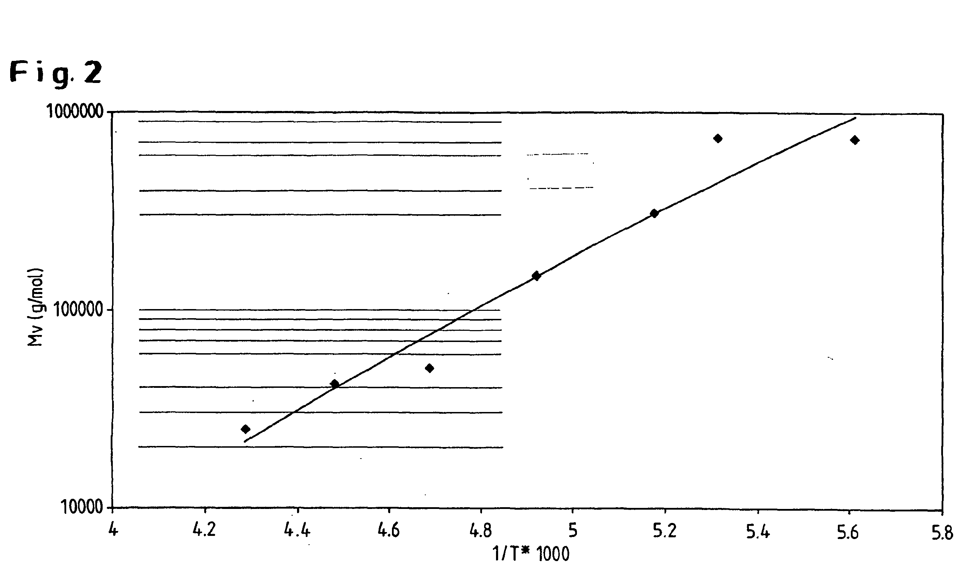

Die Abhängigkeit des Molekulargewichts von der Temperatur ist in der Figur 2 dargestellt.

### Beispiel 16 Variation der Isoprenmenge

### Allgemeine Vorschrift:

In einen 2-l 4-Hals-Kolben wurden unter einer Argonatmosphäre bei einer Temperatur von -80°C 700 g (679,2 ml) Methylchlorid und 52 g (0,93 mol) Isobuten einkondensiert (Konzentration 6,9 Gew.%). Nach Zugabe variabler Mengen Isopren wurde die Initiatorlösung gemäß Beispiel 1 zudosiert. Die im allgemeinen sehr heftige Reaktion wurde abgestoppt, sobald die Temperaturkontrolle nicht mehr möglich war.

Das gebildete Polymer wurde durch Zugabe von 2500 ml Aceton ausgefällt, durch Abpressen auf der Laborwalze vorgetrocknet und anschließend über Nacht im Vakuum bei 50°C getrocknet.

Die Details der einzelnen Versuche sind in der folgenden Tabelle 10 dargestellt.

**Tabelle 10**

| lfd. Nr. | Isopren (g) | Isopren (mol%) | Initiator-lösung (ml) | Ausbeute (g) | Staudingerindex (dl/g) | Gelanteil (Gew. %) | Mv (g/mol) | Gesamt-Isopren einbau, mol%) | 1,4-Isopren-einbau, mol% |
|---|---|---|---|---|---|---|---|---|---|
| a | 0 | 0,000 | 3 | 7,6 | 3,348 | 1 | 1.742.948 | 0 | |
| b | 1 | 1,559 | 4 | 10,2 | 1,488 | 0,9 | 489.913 | 0,8 | 0,7 |
| c | 1,16 | 1,804 | 6 | 18,1 | 1,553 | 0,8 | 523.816 | 0,9 | 0,83 |
| d | 1,3 | 2,018 | 5 | 11,2 | 1,519 | 0,8 | 505.980 | 1 | 0,91 |
| e | 4 | 5,959 | 7 | 20,3 | 0,98 | 0,4 | 254.838 | 2,9 | 2,42 |
| f | 7 | 9,981 | 14 | 25,6 | 0,914 | 0,7 | 228.495 | 6 | 5,01 |
| g | 15,8 | 20,018 | 11 | 12,0 | 0,968 | 1,2 | 249.971 | 11,2 | 9,31 |

Wie aus dieser Tabelle hervorgeht, lassen sich mit dem erfindungsgemäßen Initiatorsystem bei -80°C nahezu gelfreie Copolymere aus Isobuten und Isopren mit einem Isoprengehalt von mehr als 10 % herstellen.

### Kombinationen von Zirkontetrachlorid mit Lewis-Säuren

### Beispiel 17 AlCl₃/ZrCl₄ 9:1

1,2 g (5,1 mmol) Zirkontetrachlorid und 6,2 g (46,5 mmol) Aluminiumtrichlorid wurden unter einer Argonatmosphäre in einem 2-Hals-Rundkolben vorgelegt. 410 ml Methylenchlorid und 23 ml (25,9 g) Nitromethan wurden zugegeben. (Verhältnis Zr/Nitroverbindung 1:82,5).

Diese Mischung wurde 2 Stunden bei Raumtemperatur gerührt und anschließend 5 Tage stehen gelassen. Die noch ungelösten Bestandteile (geringe Menge) setzten sich während dieser Zeit am Boden des Kolbens ab. Die überstehende farblose Lösung wurde für die Initiierung der Polymerisation verwendet.

### Beispiel 18 AlCl₃/ZrC₄ 19:1

0,7 g (3,0 mmol) Zirkontetrachlorid und 7,6 g (57,0 mmol) Aluminiumtrichlorid wurden unter einer Argonatmosphäre in einem 2-Hals-Rundkolben vorgelegt. 480 ml Methylenchlorid und 3 ml (3,38 g) Nitromethan wurden zugegeben. (Verhältnis Zr/Nitroverbindung 1:18,4).

Diese Mischung wurde 2 Stunden bei Raumtemperatur gerührt und anschließend 2 Tage stehen gelassen. Die noch ungelösten Bestandteile (geringe Menge) setzten sich während dieser Zeit am Boden des Kolbens ab. Die überstehende farblose Lösung wurde für die Initiierung der Polymerisation verwendet.

### Beispiel 19 TiCl₄/ZrCl₄ 9:1

1,4 g (6,0 mmol) Zirkontetrachlorid und 10,207 g (53,8 mmol) Titantetrachlorid wurden unter einer Argonatmosphäre in einem 2-Hals-Rundkolben vorgelegt. 480 ml Methylenchlorid und 7 ml (7,89 g) Nitromethan wurden zugegeben. (Verhältnis Zr/Nitroverbindung 1:21,5).

Diese Mischung wurde 2 Stunden bei Raumtemperatur gerührt und anschließend 4 Tage stehen gelassen. Die noch ungelösten Bestandteile (geringe Menge) setzten sich während dieser Zeit am Boden des Kolbens ab. Die überstehende farblose Lösung wurde für die Initiierung der Polymerisation verwendet.

### Beispiel 20 AlCl₃/ZrCl₄ 9:1 mit Aktivierung durch HCl

12,2 g (52,4 mmol) Zirkontetrachlorid wurden unter einer Argonatmosphäre in einem 2-Hals-Rundkolben vorgelegt. 420 ml Methylenchlorid und 35 ml (39,4 g) Nitromethan wurden zugegeben. (Verhältnis Zr/Nitroverbindung 1:12,3).

Diese Mischung wurde 2 Stunden bei Raumtemperatur gerührt und anschließend 1 Tag stehen gelassen. Anschließend wurde 10 Minuten lang ein schwacher HCl-Strom durch die Lösung geleitet. Dabei verfärbte sich die Lösung gelb. Nach dem Absetzen der noch ungelösten Bestandteile (geringe Menge) wurde die überstehende Lösung wurde für die Initiierung der Polymerisation verwendet.

### Verwendung der Initiator-Systeme von Beispiel 17 bis 20

### Beispiel 21

In einen 2-l 4-Hals-Kolben wurden unter einer Argonatmosphäre bei einer Temperatur von -95°C 700 g (679,2 ml) Methylchlorid und 120 g (2,14 mol) Isobuten einkondensiert (Konzentration 15 Gew.%). Nach Zugabe von 4,98 g (0,07 mol, 7,3 ml) Isopren (3,3 mol%) wurden 25 ml Initiatorlösung gemäß Beispiel 17 innerhalb von 30 Minuten zudosiert. Es wurde eine milchartige Suspension mit vereinzelten Flocken erhalten, fouling trat nicht auf. Die schwache Reaktion wurde nach 30 Minuten abgestoppt.

Das gebildete Polymer wurde durch Zugabe von 2500 ml Aceton ausgefällt, durch Abpressen auf der Laborwalze vorgetrocknet und anschließend über Nacht im Vakuum bei 50°C getrocknet.

Die Analysenergebnisse sind in folgender Tabelle 11 dargestellt.

**Tabelle 11**

| | |
|---|---|
| Ausbeute | 7,5 g (6 %) |
| Staudinger-Index | 1,334 dl/g |
| Gelgehalt | 1,8 % |
| Molekulargewicht Mv | 412,9 kg/mol |
| Mn | 279,3 kg/mol |
| Mw | 563,4 kg/mol |

### Beispiel 22

In einen 2-l 4-Hals-Kolben wurden unter einer Argonatmosphäre bei einer Temperatur von -95°C 700 g (679,2 ml) Methylchlorid und 120 g (2,14 mol) Isobuten einkondensiert (Konzentration 15 Gew.%). Nach Zugabe von 4,98 g (0,07 mol, 7,3 ml) Isopren (3,3 mol%) wurden 15 ml Initiatorlösung gemäß Beispiel 18 innerhalb von 20 Minuten zudosiert. Es wurde eine milchartige Suspension mit vereinzelten Flocken erhalten, fouling trat nicht auf. Die heftige Reaktion wurde unmittelbar nach Beendigung der Zugabe abgestoppt.

Das gebildete Polymer wurde durch Zugabe von 2500 ml Aceton ausgefällt, durch Abpressen auf der Laborwalze vorgetrocknet und anschließend über Nacht im Vakuum bei 50°C getrocknet.

Die Analysenergebnisse sind in folgender Tabelle 12 dargestellt.

**Tabelle 12**

| | |
|---|---|
| Ausbeute | 20,7 g (16,5 %) |
| Staudinger-Index | 1,489 dl/g |
| Gelgehalt | 0,5 % |
| Molekulargewicht Mv | 607,7 kg/mol |
| Mn | 336,4 kg/mol |
| Mw | 685,1 kg/mol |

### Beispiel 23

In einen 2-l 4-Hals-Kolben wurden unter einer Argonatmosphäre bei einer Temperatur von -95°C 700 g (679,2 ml) Methylchlorid und 120 g (2,14 mol) Isobuten einkondensiert (Konzentration 15 Gew.%). Nach Zugabe von 4,98 g (0,07 mol, 7,3 ml) Isopren (3,3 mol%) wurden 66 ml Initiatorlösung gemäß Beispiel 19 innerhalb von 70 Minuten zudosiert. Es wurde eine milchartige Suspension mit vereinzelten Flocken erhalten, fouling trat nicht auf. Die heftige Reaktion wurde unmittelbar nach Beendigung der Zugabe abgestoppt.

Das gebildete Polymer wurde durch Zugabe von 2500 ml Aceton ausgefällt, durch Abpressen auf der Laborwalze vorgetrocknet und anschließend über Nacht im Vakuum bei 50°C getrocknet.

Die Analysenergebnisse sind in folgender Tabelle 13 dargestellt.

**Tabelle 13**

| | |
|---|---|
| Ausbeute | 49,1 g (39,3 %) |
| Staudinger-Index | 1,46 dl/g |
| Gelgehalt | 0,4 % |
| Molekulargewicht Mv | 475,6 kg/mol |
| Mooney-Wert | 76 |

### Beispiel 24

In einen 2-l 4-Hals-Kolben wurden unter einer Argonatmosphäre bei einer Temperatur von -95°C 700 g (679,2 ml) Methylchlorid und 120 g (2,14 mol) Isobuten einkondensiert (Konzentration 15 Gew.%). Nach Zugabe von 4,98 g (0,07 mol, 7,3 ml) Isopren (3,3 mol%) wurden 6 ml Initiatorlösung gemäß Beispiel 20 innerhalb von 5 Minuten zudosiert. Es wurde eine milchartige Suspension mit vereinzelten Flocken erhalten, fouling trat nicht auf. Die heftige Reaktion wurde unmittelbar nach Beendigung der Zugabe abgestoppt.

Das gebildete Polymer wurde durch Zugabe von 2500 ml Aceton ausgefällt, durch Abpressen auf der Laborwalze vorgetrocknet und anschließend über Nacht im Vakuum bei 50°C getrocknet.

Die Analysenergebnisse sind in folgender Tabelle 14 dargestellt.

**Tabelle 14**

| | |
|---|---|
| Ausbeute | 12,2 g (9,8 %) |
| Staudinger-Index | 2,079 dl/g |
| Gelgehalt | 0,2 % |
| Molekulargewicht Mv | 826,9 kg/mol |

### Beispiel 25 Hafniumtetrachlorid/Nitromethan

17,9 g (55,9 mmol) Hafniumtetrachlorid wurden unter einer Argonatmosphäre in einem 2-Hals-Rundkolben vorgelegt. 450 ml Methylenchlorid und 32 ml (36,1 g) Nitromethan wurden zugegeben. (Verhältnis Hf/Nitroverbindung 1:10,6).

Diese Mischung wurde 2 Stunden bei Raumtemperatur gerührt und anschließend 1 Tag stehen gelassen. Die noch ungelösten Bestandteile (geringe Menge) setzten sich während dieser Zeit am Boden des Kolbens ab. Die überstehende farblose Lösung wurde für die Initiierung der Polymerisation verwendet.

### Beispiel 26

In einen 2-l 4-Hals-Kolben wurden unter einer Argonatmosphäre bei einer Temperatur von -95°C 700 g (679,2 ml) Methylchlorid und 120 g (2,14 mol) Isobuten einkondensiert (Konzentration 15 Gew.%). Nach Zugabe von 4,98 g (0,07 mol, 7,3 ml) Isopren (3,3 mol%) wurden 11 ml Initiatorlösung gemäß Beispiel 25 innerhalb von 15 Minuten zudosiert. Es wurde eine milchartige Suspension mit vereinzelten Flocken erhalten, fouling trat nicht auf. Die heftige Reaktion wurde unmittelbar nach Beendigung der Zugabe abgestoppt.

Das gebildete Polymer wurde durch Zugabe von 2500 ml Aceton ausgefällt, durch Abpressen auf der Laborwalze vorgetrocknet und anschließend über Nacht im Vakuum bei 50°C getrocknet.

Die Analysenergebnisse sind in folgender Tabelle 15 dargestellt.

**Tabelle 15**

| | |
|---|---|
| Ausbeute | 21 g (16,8 %) |
| Staudinger-Index | 2,427 dl/g |
| Gelgehalt | 0,4 % |
| Molekulargewicht Mv | 1053 kg/mol |

Figur 1 stellt die Molekulargewichtsverteilung von Beispiel 2 dar.

Figur 2 stellt Mv als Funktion der Temperatur dar, die Parameter der Kurve lauten y=2E-05 x ^{14,133} R²=0,9559.

## Patentansprüche

1. Verfahren zur Herstellung von Isoolefincopolymeren in Gegenwart von Zirkoniumhalogeniden und/oder Hafniumhalogeniden, **dadurch gekennzeichnet, dass** man in Gegenwart von organischen Nitroverbindungen polymerisiert.

2. Verfahren nach Anspruch 1, **dadurch gekennzeichnet, dass** die organische Nitroverbindung der allgemeine Formel (I)
R-NO₂ (I)
entspricht, wobei R ausgewählt wird aus der Gruppe C₁-C₁₈-Alkyl, C₃-C₁₈₋Cycloalkyl oder C₆-C₂₄-Cycloaryl.

3. Verfahren nach Anspruch 1 und/oder 2, **dadurch gekennzeichnet, dass** die Konzentration der organischen Nitroverbindung im Reaktionsmedium im Bereich von 5 bis 15000 ppm liegt.

4. Verfahren nach einem oder mehreren der Ansprüche 1-3, **dadurch gekennzeichnet, dass** man als Zirkoniumhalogenid ZrCl₄ und als Hafniumhalogenid HfCl₄ einsetzt.

5. Verfahren nach einem oder mehreren der Ansprüche 1-4, **dadurch gekennzeichnet, dass** man Isobuten mit Isopren und gegebenfalls weiteren Monomeren copolymerisiert.

6. Verfahren nach einem oder mehreren der Ansprüche 1-5, **dadurch gekennzeichnet, dass** man zusätzlich AlCl₃ oder ein aus AlCl₃ herstellbares Katalysatorsystem einsetzt.

7. Mischung aus Zirkoniumhalogenid und/oder Hafniumhalogenid und organischer Nitroverbindung der allgemeinen Formel (I)
R-NO₂ (I),
wobei R ausgewählt wird aus der Gruppe C₁-C₁₈-Alkyl, C₃-C₁₈-Cycloalkyl oder C₆-C₂₄-Cycloaryl.

8. Verwendung der Mischung gemäss Anspruch 7 als Katalysator.

## Claims

1. Process for the preparation of isoolefin copolymers in the presence of zirconium halides and/or hafnium halides, **characterized in that** polymerization is carried out in the presence of organic nitro compounds.

2. Process according to Claim 1, **characterized in that** the organic nitro compound corresponds to the general formula (I)
R-NO₂ (I)
wherein R is selected from the group C₁-C₁₈-alkyl, C₃-C₁₈-cycloalkyl or C₆-C₂₄-cycloaryl.

3. Process according to Claim 1 and/or 2, **characterized in that** the concentration of the organic nitro compound in the reaction medium is in the range from 5 to 15,000 ppm.

4. Process according to one or more of Claims 1-3, **characterized in that** the zirconium halide used is ZrCl₄ and the hafnium halide used is HfCl₄.

5. Process according to one of more of Claims 1-4, **characterized in that** isobutene is copolymerized with isoprene and, optionally, with further monomers.

6. Process according to one or more of Claims 1-5, **characterized in that** AlCl₃ or a catalyst system that can be prepared from AlCl₃ is additionally used.

7. Mixture of zirconium halide and/or hafnium halide and the organic nitro compound of the general formula (I)
R-NO₂ (I),
wherein R is selected from the group C₁-C₁₈-alkyl, C₃-C₁₈-cycloalkyl or C₆-C₂₄ -cycloaryl.

8. Use of the mixture according to Claim 7 as catalyst.

## Revendications

1. Procédé de préparation de copolymères d'iso-oléfine en présence d'halogénures de zirconium et/ou d'halogénures de hafnium, **caractérisé en ce que** la polymérisation est réalisée en présence de composés nitro organiques.

2. Procédé selon la revendication 1, **caractérisé en ce que** le composé nitro organique correspond à la formule générale (I)
R-NO₂ (I)
dans laquelle R est choisi parmi le groupe constitué d'un alkyle en C₁-C₁₈, d'un cycloalkyle en C₃-C₁₈ ou d'un cycloaryle en C₆-C₂₄.

3. Procédé selon la revendication 1 et/ou 2, **caractérisé en ce que** la concentration du composé nitro organique dans le milieu réactionnel est dans la plage de 5 à 15 000 ppm.

4. Procédé selon l'une ou plusieurs des revendications 1 à 3, **caractérisé en ce que** l'on utilise du ZrCl₄ en tant qu'halogénure de zirconium et du HfCl₄ en tant qu'halogénure de hafnium.

5. Procédé selon l'une ou plusieurs des revendications 1 à 4, **caractérisé en ce que** de l'isobutène est copolymérisé avec de l'isoprène et éventuellement des monomères supplémentaires.

6. Procédé selon l'une ou plusieurs des revendications 1 à 5, **caractérisé en ce que** l'on utilise en outre de l'AlCl₃ ou un système catalyseur pouvant être préparé à partir d'AlCl₃.

7. Mélange d'un halogénure de zirconium et/ou d'un halogénure de hafnium et d'un composé nitro organique de formule générale (I)
R-NO₂ (I)
dans laquelle R est choisi parmi le groupe constitué d'un alkyle en C₁-C₁₈, d'un cycloalkyle en C₃-C₁₈ ou d'un cycloaryle en C₆-C₂₄.

8. Utilisation du mélange selon la revendication 7 en tant que catalyseur.
